# EUROPÄISCHE PATENTSCHRIFT

(11) **EP 3 631 288 B1**
(45) Veröffentlichungstag und Bekanntmachung des Hinweises auf die Patenterteilung: **28.07.2021**
(21) Anmeldenummer: 18726755.4
(22) Anmeldetag: 15.05.2018
(51) Int. Cl.: F21S 41/148, F21S 41/675, F21S 41/39

(54) **LED-LICHTMODUL FÜR EINEN KRAFTFAHRZEUGSCHEINWERFER**
LED LIGHT MODULE FOR A MOTOR VEHICLE HEADLIGHT
MODULE D'ÉCLAIRAGE À DEL POUR UN PHARE DE VÉHICULE À MOTEUR

(30) Priorität: 24.05.2017 DE 102017111447
(43) Veröffentlichungstag der Anmeldung: 08.04.2020
(73) Patentinhaber: Automotive Lighting Reutlingen GmbH, 72762 Reutlingen (DE)
(72) Erfinder: ROTTSTAEDT, Olaf, 99880 Waltershausen (DE); HARTMANN, Andre, 72764 Reutlingen (DE)
(74) Vertreter: DREISS Patentanwälte PartG mbB
(86) Internationale Anmeldenummer: PCT/EP2018/062541
(87) Internationale Veröffentlichungsnummer: WO 2018/215244

(56) Entgegenhaltungen:
- EP-A1- 1 854 665
- EP-A1- 3 176 493
- WO-A1-2014/008523
- DE-A1-102011 003 908
- DE-A1-102011 003 910
- US-A1- 2008 247 182
- US-A1- 2009 034 279

## Beschreibung

Die vorliegende Erfindung betrifft ein LED-Lichtmodul für einen Kraftfahrzeugscheinwerfer. Das Lichtmodul umfasst mindestens eine LED zum Aussenden von Licht, eine in einem Halterahmen mittels mindestens einer Lagerstelle um eine vertikale Drehachse drehbar gelagerte Reflektorbaugruppe mit einem Reflektor zum Reflektieren zumindest eines Teils des ausgesandten Lichts, eine elektrische Antriebseinheit zum Drehen der Reflektorbaugruppe um die vertikale Drehachse, und eine elektrische Steuereinheit zur Steuerung der Antriebseinheit.

Aus der CN 105387410 ist ein LED-Lichtmodul der eingangs genannten Art bekannt. Dort wird vorgeschlagen, mehrere solcher LED-Lichtmodule nebeneinander anzuordnen und zu einer Lichtmodulgruppe zusammenzufassen. Jedes LED-Lichtmodul für sich kann um eine vertikale Drehachse in horizontaler Richtung gedreht werden, um eine Kurvenlichtfunktion zu realisieren. Alle LED-Lichtmodule der Lichtmodulbaugruppe können gemeinsam um horizontale Drehachsen in vertikaler Richtung verschwenkt werden, um eine Leuchtweitenregulierung zu realisieren.

US 2008/247182 A1, WO 2014/008523 A1, EP 1 854 665 A1, DE 10 2011 003908 A1, US 2009/034279 A1 und DE 10 2011 003910 A1 offenbaren jeweils ein Lichtmodul für einen Kraftfahrzeugscheinwerfer.

Ausgehend von dem beschriebenen Stand der Technik liegt der vorliegenden Erfindung die Aufgabe zugrunde, ein LED-Lichtmodul zu schaffen, das besonders einfach und kompakt aufgebaut ist, das leicht zu montieren ist und bei dem möglichst geringe Toleranzen im funktionalen Zusammenspiel der verschiedenen Bauteile des Lichtmoduls erreicht werden können.

Zur Lösung dieser Aufgabe wird ausgehend von dem LED-Lichtmodul der eingangs genannten Art vorgeschlagen, dass der Halterahmen entlang einer vertikalen Schnittebene, die parallel zu oder deckungsgleich mit der vertikalen Drehachse verläuft, in zwei Rahmenhälften unterteilt ist, wobei die mindestens eine Lagerstelle für die Reflektorbaugruppe zu einem Teil in der einen Rahmenhälfte und zu einem anderen Teil in der anderen Rahmenhälfte ausgebildet ist und sich die mindestens eine Lagerstelle durch Zusammensetzen der beiden Rahmenhälften bildet.

Ein Vorteil des erfindungsgemäßen LED-Lichtmoduls ist es, dass die drehbare Reflektorbaugruppe besonders einfach und schnell in der mindestens einen Lagerstelle des Halterahmens angeordnet werden kann, indem einfach die beiden Rahmenhälften von gegenüberliegenden Seiten aus um mindestens einen entsprechenden Lagerabschnitt der Reflektorbaugruppe gelegt und die Rahmenhälften aneinander befestigt werden. Die jeweiligen Lagerstellenteile in den beiden Rahmenhälften bilden dann zusammen die mindestens eine Lagerstelle des Halterahmens, in der der entsprechende mindestens eine Lagerabschnitt der Reflektorbaugruppe drehbar gelagert ist. Vorzugsweise befindet sich der mindestens eine Lagerabschnitt an der Unterseite der Reflektorbaugruppe. Dementsprechend ist die Lagerstelle an einem unteren Abschnitt des Halterahmens ausgebildet. Es wird vorgeschlagen, dass die Reflektorbaugruppe ausschließlich um diesen mindestens einen Lagerabschnitt an unteren Abschnitt des Halterahmens drehbar gelagert ist. Eine drehbare Lagerung auf der gegenüberliegenden Seite oberhalb der Reflektorbaugruppe in einer zusätzlichen Lagerstelle in einem oberen Abschnitt des Halterahmens kann entfallen.

Dadurch ist es möglich, die mindestens eine LED oberhalb der Reflektorbaugruppe an dem Halterahmen zu befestigen. Vorzugsweise ist die mindestens eine LED selbst auf einer Platine (sog. PCB) angeordnet und die Platine dann an dem Halterahmen befestigt. Die mindestens eine LED kann dann ungehindert Licht in eine nach unten gerichtete Hauptabstrahlrichtung auf die Reflexionsfläche des Reflektors aussenden. Bei einer Ausgestaltung des Halterahmens aus einem gut Wärme leitfähigen Material, bspw. einem Metall, insbesondere Aluminium, kann der Halterahmen gleichzeitig auch als Kühlkörper dienen. Vorzugsweise sind die beiden Rahmenhälften aus einem Aluminiumdruckguss hergestellt. Die mindestens eine LED kann mittels Flexbandleitungen elektrisch kontaktiert werden, die außen entlang des Halterahmens geführt und befestigt sein können, so dass an der Unterseite des Halterahmens ein Steckerkontakt ausgebildet werden kann, an den ein Steuergerät für die mindestens eine LED angeschlossen werden kann, um die mindestens eine LED mit elektrischer Energie zu versorgen.

Die Verwendung eines in zwei Rahmenhälften unterteilten Halterahmens hat zudem den Vorteil, dass in den Rahmenhälften Vertiefungen ausgebildet werden können, die nach dem Zusammensetzen der Rahmenhälften Kammern bilden, in denen verschiedene Bauteile des LED-Lichtmoduls untergebracht werden können, so dass sich eine besonders kompakte und leicht handhabbare, sowie ästhetisch ansprechende LED-Lichtmodul-Baugruppe ergibt. Bauteile des LED-Lichtmoduls, die nicht in den Kammern des Halterahmens untergebracht werden (bspw. aus Platzgründen oder aus thermischen Gründen), können außen an dem Halterahmen befestigt werden.

Gemäß einer vorteilhaften Weiterbildung der vorliegenden Erfindung wird vorgeschlagen, dass die Reflektorbaugruppe in dem Halterahmen mittels zweier Lagerstellen um die vertikale Drehachse drehbar gelagert ist, wobei die beiden Lagerstellen unterhalb der Reflektorbaugruppe an einem unteren Abschnitt des Halterahmens entlang der vertikalen Drehachse versetzt zueinander angeordnet sind. Durch die versetzt zueinander angeordneten Lagerstellen ist - trotz der lediglich einseitigen Lagerung der Reflektorbaugruppe in dem Halterahmen - eine besonders toleranz- und spielfreie Lagerung der Reflektorbaugruppe möglich.

Gemäß einer vorteilhaften Ausgestaltung der Erfindung wird vorgeschlagen, dass der Antriebseinheit mindestens ein Zahnrad eines Getriebes zugeordnet ist, das zur Umwandlung einer Betätigungsbewegung der Antriebseinheit in eine entsprechende Drehbewegung der Reflektorbaugruppe vorgesehen ist, und dass der Reflektorbaugruppe mindestens ein weiteres Zahnrad des Getriebes zugeordnet ist, wobei die beiden Rahmenhälften Vertiefungen aufweisen, in denen nach dem Zusammensetzen der beiden Rahmenhälften die Zahnräder aufgenommen sind. Die Antriebseinheit ist vorzugsweise als ein Elektromotor, insbesondere als ein elektrischer Schrittmotor ausgebildet. Über das Getriebe mit den Zahnrädern wird eine Drehbewegeung der Motorwelle (Betätigungsbewegung) in eine entsprechende Drehbewegung der Reflektorbaugruppe um die vertikale Achse umgewandelt. Die Reflektorbaugruppe kann um bis zu 360° um die vertikale Drehachse rotieren.

Des Weiteren wird vorgeschlagen, dass der Reflektorbaugruppe mindestens ein Magnet und der Antriebseinheit ein magnetfeldsensitiver Sensor zugeordnet ist, wobei die beiden Rahmenhälften Vertiefungen aufweisen, in denen nach dem Zusammensetzen der beiden Rahmenhälften der Magnet und der Sensor aufgenommen sind. Der Magnet ist insbesondere als ein Ringmagnet ausgebildet. Der Sensor kann bspw. als ein Hall-Sensor ausgebildet sein, der ein sich wechselndes Magnetfeld bei Drehung des Ringmagnets zusammen mit der Reflektorbaugruppe um die vertikale Drehachse detektieren kann. Eine Verarbeitungseinheit, die integraler Bestandteil des Sensors sein kann, kann daraus dann einen Relativ- oder Absolutwert für die Drehposition und Ausrichtung der Reflektorbaugruppe ermitteln. Selbstverständlich wäre es auch denkbar, dass der Reflektorbaugruppe der magnetfeldsensitive Sensor und der Antriebseinheit der mindestens eine Magnet zugeordnet ist.

Gemäß einer anderen vorteilhaften Weiterbildung der Erfindung wird vorgeschlagen, dass die Antriebseinheit außen an dem Halterahmen befestigt ist und der Halterahmen eine Öffnung für ein bewegbares Betätigungselement der Antriebseinheit aufweist, wobei die Öffnung für das Betätigungselement der Antriebseinheit zu einem Teil in der einen Rahmenhälfte und zu einem anderen Teil in der anderen Rahmenhälfte ausgebildet ist und sich die Öffnung durch Zusammensetzen der beiden Rahmenhälften bildet. Die Antriebseinheit ist vorzugsweise als ein Elektromotor ausgebildet. Gemäß dieser Weiterbildung bilden die beiden Rahmenhälften des Halterahmens also eine Öffnung, durch die eine Motorwelle des Elektromotors hindurchgeführt werden kann. Auf der Motorwelle ist ein erstes Zahnrad des Getriebes drehfest befestigt, welches in einer Kammer im Inneren des zusammengesetzten Halterahmens angeordnet ist. Auch hier ergibt sich eine besonders einfache und zeitsparende Montage der Antriebseinheit, da die Rahmenhälften von gegenüberliegenden Seiten um die Motorwelle gelegt werden können, so dass das erste Zahnrad in einer Kammer im Inneren des Halterahmens und die Motorwelle in der Öffnung aufgenommen wird.

Der Antrieb des der Reflektorbaugruppe zugeordneten weiteren Zahnrads des Getriebes kann unmittelbar durch das erste Zahnrad erfolgen, oder aber mittelbar über mindestens ein weiteres Zahnrad. Das mindestens eine weitere Zahnrad, welches die Drehbewegung des ersten Zahnrads der Motorwelle auf das weitere Zahnrad der Reflektorbaugruppe überträgt, ist vorzugsweise ebenfalls in einer entsprechenden Lagerstelle in dem Halterahmen gelagert. Auch für dieses mindestens eine weitere Zahnrad ist es vorteilhaft, wenn die entsprechende Lagerstelle zu einem Teil in der einen Rahmenhälfte und zu einem anderen Teil in der anderen Rahmenhälfte ausgebildet ist und sich die entsprechende Lagerstelle durch Zusammensetzen der beiden Rahmenhälften bildet.

Es wird vorgeschlagen, dass die Steuereinheit außen an dem Halterahmen befestigt ist. Die Steuereinheit umfasst bspw. eine Leiterplatte (sog. PCB) auf der elektrische und elektronische Bauelemente, Buchsen, Stecker, Kontaktstifte u.a. angeordnet und kontaktiert sein können. Die Steuereinheit wird vorzugsweise an die Außenseite des Halterahmens geschraubt. Besonders bevorzugt ist sie an der Unterseite eines unteren Abschnitts des Halterahmens angeordnet.

Gemäß einer weiteren vorteilhaften Ausgestaltung der Erfindung wird vorgeschlagen, dass die mindestens eine LED relativ zu dem Halterahmen feststehend und relativ zu der Reflektorbaugruppe berührungslos in dem LED-Lichtmodul angeordnet ist. Vorzugsweise ist die mindestens eine LED bei in den Kraftfahrzeugscheinwerfer eingebautem LED-Lichtmodul oberhalb der Reflektorbaugruppe angeordnet, so dass sie in einer nach unten gerichteten Hauptabstrahlrichtung Licht mit einer lambert'schen Abstrahlcharakteristik in einen 180°-Halbraum unterhalb der LED in Richtung der Reflexionsfläche des Reflektors aussendet. Die mindestens eine LED ist vorzugsweise auf einer Platine (sog. PCB) befestigt und elektrisch kontaktiert. Die Platine mit der mindestens einen LED kann an dem Halterahmen befestigt werden. Wenn dieser aus einem gut Wärme leitfähigen Material besteht, kann der Halterahmen gleichzeitig als Kühlkörper für die mindestens eine LED dienen. Bei Drehung der Reflektorbaugruppe um die vertikale Achse dreht sich der Reflektor relativ zu der mindestens einen LED.

Vorteilhafterweise ist die mindestens eine LED mittels Flexbandleitungen elektrisch kontaktiert, die außen entlang des Halterahmens verlaufen. Insbesondere sind die Flexbandleitungen entlang der Außenseite des Halterahmens geführt und zumindest punktuell daran befestigt.

Gemäß einer vorteilhaften Weiterbildung der Erfindung wird vorgeschlagen, dass die mindestens eine LED eine RGB-LED zum Aussenden von Licht einer beliebigen Farbe umfasst. Eine solche RGB-LED kann Licht einer nahezu beliebigen Farbe aussenden. Die RGB-LED kann außerhalb eines Brennpunkts des Reflektors der Reflektorbaugruppe angeordnet sein. Mit Hilfe der RGB-LED kann bspw. farbiges Licht zur Realisierung einer Begrüßungslichtfunktion (kann nach Betätigung eines Türöffners des Kraftfahrzeugs oder nach einem Verschließen des Kraftfahrzeugs automatisch aktiviert werden) ausgesandt werden. Zusätzlich kann die Reflektorbaugruppe während der Begrüßungslichtfunktion um die vertikale Drehachse rotieren, so dass mit dem erfindungsgemäßen LED-Lichtmodul völlig neue Licht- bzw. Leuchtenfunktionen realisiert werden können.

Gemäß einer anderen vorteilhaften Weiterbildung der Erfindung wird vorgeschlagen, dass die mindestens eine LED eine Hochleistungs-LED zum Aussenden von weißem Licht umfasst, die in einem Brennpunkt des Reflektors angeordnet ist. Selbstverständlich können auch mehrere Hochleistungs-LEDs in oder nahe dem Brennpunkt des Reflektors angeordnet sein. Mit Hilfe einer solchen LED kann bspw. eine Abblendlichtfunktion realisiert werden. Eine horizontale oder asymmetrische Helldunkelgrenze des Abblendlichts kann bspw. durch eine entsprechende Form des Reflektors realisiert werden. Alternativ wäre es auch denkbar, zumindest für die Dauer einer Abblendlichtfunktion, eine Blendenanordnung in dem Strahlengang des von dem Reflektor reflektierten Lichts anzuordnen. Eine Kante der Blendenanordnung kann mittels einer Projektionsoptik, die bspw. als eine Projektionslinse ausgebildet ist, als Helldunkelgrenze auf eine Fahrbahn vor dem Kraftfahrzeug projiziert werden.

Damit während der Realisierung einer Kurvenlichtfunktion des LED-Lichtmoduls die Lichtstärkeverteilung und die Kontur der Lichtverteilung weitgehend konstant bleibt, wird vorgeschlagen, dass der Brennpunkt des Reflektors, in dem die Hochleistungs-LED angeordnet ist, auf der vertikalen Drehachse der Reflektorbaugruppe liegt.

Vorteilhafterweise hat der Halterahmen seitliche Lagerstellen, mittels der das LED-Lichtmodul um eine horizontale Drehachse verschwenkbar ist. Durch ein vertikales Verschwenken der Reflektorbaugruppe kann eine Leuchtweitenregulierung realisiert werden. Außerdem kann durch Anheben der Reflektorbaugruppe während sie ein Abblendlicht erzeugt, eine Fernlichtfunktion realisiert werden. In diesem Fall könnte die Reflektorbaugruppe ein 'Zusatzfernlicht' erzeugen, das zusammen mit einer anderen Fernlicht-Lichtverteilung eine Fernlichtfunktion realisiert.

Des Weiteren wird vorgeschlagen, dass die Reflektorbaugruppe im Strahlengang des von dem Reflektor reflektierten Lichts eine Lichtscheibe aufweist, durch die das reflektierte Licht hindurchtritt und in die über mindestens eine ihrer Seitenflächen Licht einkoppelbar ist, das zumindest teilweise in Richtung des von dem Reflektor reflektierten und durch die Lichtscheibe hindurchtretenden Lichts aus der Lichtscheibe austritt, so dass diese als eine leuchtende Fläche erscheint. Durch das aus der Lichtscheibe austretende Licht kann ein Positionslicht realisiert werden. Das seitlich in die Lichtscheibe eingekoppelte Licht wird vorzugsweise von einer oder mehreren LEDs erzeugt.

Vorteilhafterweise hat die Lichtscheibe zumindest um mehrere ihrer Seitenflächen herum einen Lichtleiter, in den Licht einkoppelbar ist, das zumindest teilweise in Richtung der Seitenflächen der Lichtscheibe aus dem Lichtleiter austritt und über die Seitenflächen in die Lichtscheibe einkoppelt.

Weitere Merkmale und Vorteile der vorliegenden Erfindung werden nachfolgend unter Bezugnahme auf die Figuren näher erläutert. Die vorliegende Erfindung kann die nachfolgend anhand eines bevorzugten Ausführungsbeispiels beschrieben und in den Figuren gezeigten Merkmale auch separat voneinander oder in einer anderen Kombination als hier beschrieben aufweisen. In den Figuren zeigen:
- Figur 1: ein erfindungsgemäßes LED-Lichtmodul gemäß einer bevorzugten Ausführungsform in einer Seitenansicht teilweise im Schnitt;
- Figur 2: das LED-Lichtmodul aus Figur 1 in einer Ansicht von schräg unten;
- Figur 3: das LED-Lichtmodul aus Figur 1 in einer Seitenansicht;
- Figur 4: das LED-Lichtmodul aus Figur 1 in einer perspektivischen Ansicht teilweise im Schnitt;
- Figur 5: eine Antriebseinheit, ein Getriebe und eine Reflektorbaugruppe des LED-Lichtmoduls aus Figur 1;
- Figur 6: eine Reflektorbaugruppe des LED-Lichtmoduls aus Figur 1;
- Figur 7: das LED-Lichtmodul aus Figur 1 in einer Explosionsdarstellung;
- Figur 8: einen Halterahmen und eine Reflektorbaugruppe des LED-Lichtmoduls aus Figur 1 in einer Explosionsdarstellung;
- Figur 9: eine Lichtmodulgruppe umfassend drei nebeneinander angeordnete LED-Lichtmodule aus Figur 1 in einer perspektivischen Ansicht; und
- Figur 10: die Lichtmodulgruppe aus Figur 7 in einer Ansicht von vorne entgegen einer Lichtaustrittsrichtung.

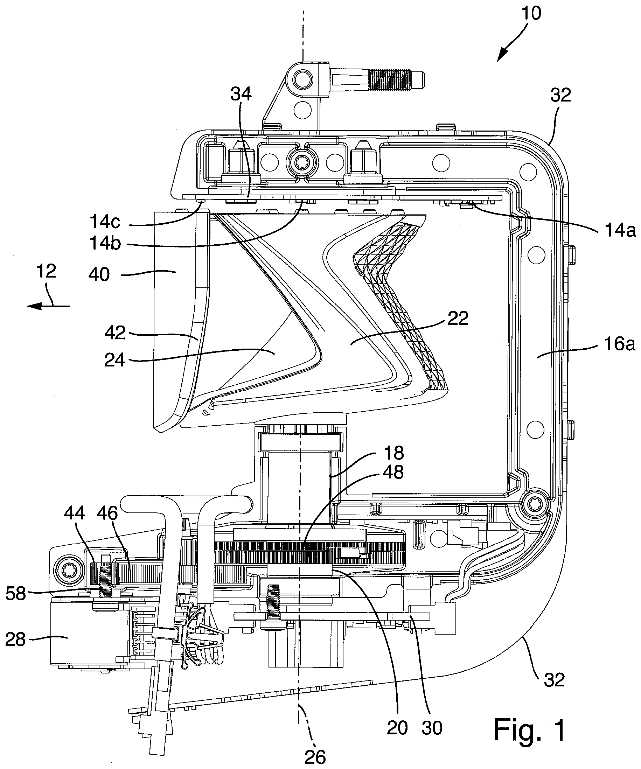

In Figur 1 ist ein erfindungsgemäßes LED-Lichtmodul in seiner Gesamtheit mit dem Bezugszeichen 10 bezeichnet. Das LED-Lichtmodul 10 wird in ein Gehäuse (nicht dargestellt) eines Kraftfahrzeugscheinwerfers eingebaut und dient zur Erzeugung einer vorgegebenen Lichtverteilung, die in eine Lichtaustrittsrichtung 12 vor das Kraftfahrzeug ausgesandt wird. Die Lichtverteilung kann ein Abblendlicht, ein Fernlicht, ein Positionslicht, ein Kurvenlicht und/oder eine beliebig andere Lichtfunktion (z.B. ein Begrüßungslicht) sein. Das LED-Lichtmodul 10 ist besonders kompakt aufgebaut, als eine Einheit separat handhabbar und kann kostengünstig und schnell montiert werden. Zudem weist das Lichtmodul 10 aufgrund seiner besonderen Konstruktion besonders geringe Toleranzen auf, so dass die vorgegebene Lichtverteilung mit besonders hoher Genauigkeit erzeugt werden kann.

Das LED-Lichtmodul 10 umfasst zunächst mindestens eine LED 14a, 14b zum Aussenden von Licht. Ferner umfasst das LED-Lichtmodul 10 einen Halterahmen 16 mit mindestens einer Lagerstelle 18, 20 sowie eine Reflektorbaugruppe 22 mit einem Reflektor 24 zum Reflektieren zumindest eines Teils des von den LEDs 14a, 14b ausgesandten Lichts. Die Reflektorbaugruppe 22 ist mittels der Lagerstellen 18, 20 um eine vertikale Drehachse 26 drehbar in dem Halterahmen 16 gelagert. Des Weiteren umfasst das LED-Lichtmodul 10 eine elektrische Antriebseinheit 28 zum Drehen der Reflektorbaugruppe 22 um die vertikale Drehachse 26. Schließlich umfasst das Lichtmodul 10 eine elektrische Steuereinheit 30 zur Steuerung der Antriebseinheit 28 und/oder der LEDs 14a, 14b.

Das Lichtmodul 10 ist bspw. zur Realisierung einer Begrüßungslichtfunktion (kann nach Betätigung eines Türöffners des Kraftfahrzeugs oder nach einem Verschließen des Kraftfahrzeugs automatisch aktiviert werden) ausgebildet. Weitere Lichtfunktionen, die mit dem Lichtmodul 10 realisiert werden könnten, sind bspw. Positionslicht, Zusatz-Abblend- und Zusatz-Fernlicht (realisieren zusammen mit einem anderen Abblendlicht oder Fernlicht ein Abblendlicht bzw. ein Fernlicht) und Kurvenlicht.

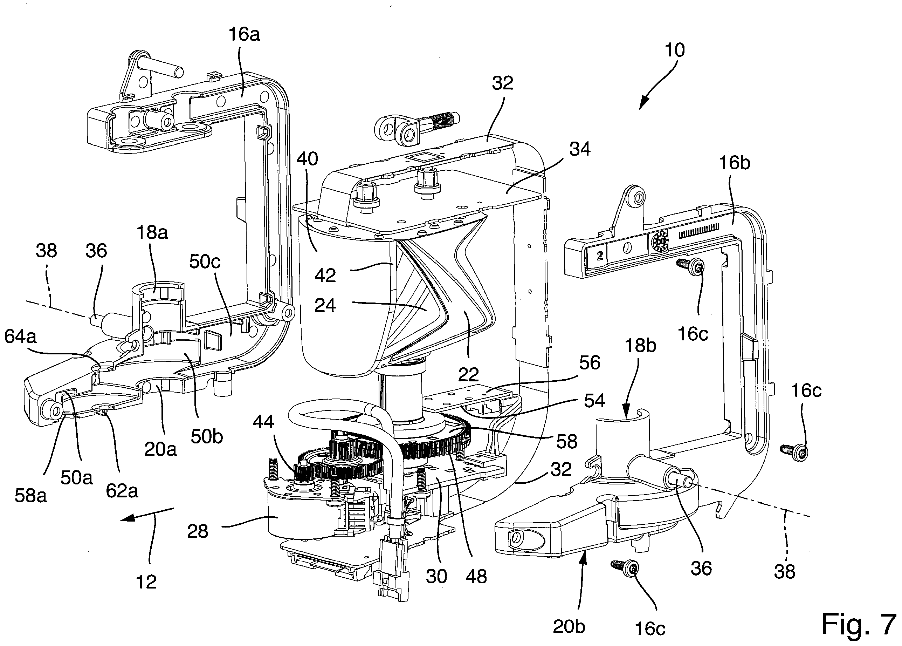

Der Halterahmen 16 ist entlang einer vertikalen Schnittebene (in der Zeichenebene der Figur 1 bzw. parallel dazu), die parallel zu oder deckungsgleich mit der vertikalen Drehachse 26 verläuft, in zwei Rahmenhälften 16a, 16b unterteilt (vgl. Figur 7). Die beiden Lagerstellen 18, 20 für die Reflektorbaugruppe sind zu einem Teil 18a, 20a in der einen Rahmenhälfte 16a und zu einem anderen Teil 18b, 20b in der anderen Rahmenhälfte 16b ausgebildet. Die Lagerstellen 18, 20 bilden sich also durch Zusammensetzen der beiden Rahmenhälften 16a, 16b. Die Rahmenhälften 16a, 16b werden nach dem Zusammensetzen aneinander befestigt, bspw. mittels Schrauben 16c. Durch horizontales Drehen der Reflektorbaugruppe 22 um die vertikale Drehachse 26 kann eine Kurvenlichtfunktion realisiert werden. Dabei steht die Lichtquelle 14b vorzugsweise feststehend am Halterahmen 16 angeordnet und die Reflektorbaugruppe 22 dreht sich um den Brennpunkt der Lichtquelle 14b, das heißt die Drehachse 26 verläuft durch die Lichtquelle 14b. Die Reflektorbaugruppe 22 kann sich je nach Erfordernis um bis zu +/-45° drehen. Selbst eine Rotation der Reflektorbaugruppe 22 um 360° ist möglich.

Die LEDs 14a, 14b sind relativ zu dem Halterahmen 16 feststehend und relativ zu der Reflektorbaugruppe 22 berührungslos in dem LED-Lichtmodul 10 angeordnet. Insbesondere sind die LEDs 14a, 14b auf einer Platine 34 (sog. PCB) befestigt und darüber kontaktiert. Die Platine 34 ist ihrerseits an einer Unterseite eines oberen Abschnitts des Halterahmens 16 befestigt. Der Halterahmen 16 besteht aus einem gut Wärme leitenden Material, insbesondere aus einem Metall, besonders bevorzugt aus Aluminium, so dass er außer zur Halterung der LEDs 14a, 14b auch als Kühlkörper zum Abtransport von Wärme der LEDs 14a, 14b dient. Die LEDs 14a, 14b sind bei einem in den Kraftfahrzeugscheinwerfer eingebauten LED-Lichtmodul 10 oberhalb der Reflektorbaugruppe 22 angeordnet, so dass sie in einer nach unten gerichteten Hauptabstrahlrichtung Licht mit einer lambert'schen Abstrahlcharakteristik in einen 180°-Halbraum unterhalb der LEDs 14a, 14b in Richtung einer Reflexionsfläche des Reflektors 24 aussenden. Die LEDs 14a, 14b sind mittels Flexbandleitungen 32 elektrisch kontaktiert, die zumindest über einen Teil ihrer Längserstreckung außen entlang des Halterahmens 16 verlaufen und daran befestigt sind.

Die LEDs umfassen vorzugsweise eine RGB-LED 14a zum Aussenden von Licht einer beliebigen Farbe. Die RGB-LED 14a kann außerhalb eines Brennpunkts des Reflektors 24 der Reflektorbaugruppe 22 angeordnet sein. Vorzugsweise ist die RGB-LED 14a auf der Platine 34 hinter der rotierenden Reflektorbaugruppe 22 angeordnet und beleuchtet einen Innenbereich des Scheinwerfers. Mit Hilfe der RGB-LED 14a kann bspw. farbiges Licht zur Realisierung einer Begrüßungslichtfunktion (kann nach Betätigung eines Türöffners des Kraftfahrzeugs oder nach einem Verschließen des Kraftfahrzeugs automatisch aktiviert werden) ausgesandt werden. Zusätzlich kann die Reflektorbaugruppe 22 während der Begrüßungslichtfunktion um die vertikale Drehachse 26 rotieren, bspw. um 180°. Mit dem erfindungsgemäßen LED-Lichtmodul 10 können also völlig neue Licht- bzw. Leuchtenfunktionen realisiert werden.

Ferner umfassen die LEDs vorzugsweise eine Hochleistungs-LED 14b zum Aussenden von weißem Licht. Diese ist in einem Brennpunkt des Reflektors 24 der Reflektorbaugruppe 22 angeordnet. Selbstverständlich können auch mehrere Hochleistungs-LEDs 14b in oder nahe dem Brennpunkt des Reflektors 24 angeordnet sein. Mit Hilfe einer solchen LED 14b kann bspw. eine Abblendlichtfunktion realisiert werden. Eine horizontale (symmetrische oder asymmetrische) Helldunkelgrenze des Abblendlichts kann bspw. durch eine entsprechende Form des Reflektors 24 realisiert werden. Alternativ wäre es auch denkbar, zumindest für die Dauer einer Abblendlichtfunktion, eine Blendenanordnung (nicht dargestellt) in dem Strahlengang des von dem Reflektor 24 in Lichtaustrittsrichtung 12 reflektierten Lichts anzuordnen. Eine Kante der Blendenanordnung könnte dann mittels einer Projektionsoptik (nicht dargestellt), die bspw. als eine Projektionslinse ausgebildet ist, als Helldunkelgrenze auf eine Fahrbahn vor dem Kraftfahrzeug projiziert werden. Die Projektionsoptik könnte als Designteil zusammen mit der Reflektorbaugruppe 12 rotieren.

Damit während der Realisierung einer Kurvenlichtfunktion des LED-Lichtmoduls 10 eine Lichtstärkeverteilung und eine Kontur der Lichtverteilung weitgehend konstant bleibt, wird vorgeschlagen, dass der Brennpunkt des Reflektors 24, in dem die Hochleistungs-LED 14b angeordnet ist, auf der vertikalen Drehachse 26 der Reflektorbaugruppe 22 liegt.

Des Weiteren wird vorgeschlagen, dass die Reflektorbaugruppe 22 im Strahlengang des von dem Reflektor 24 reflektierten Lichts eine Lichtscheibe 40 aufweist, durch die das reflektierte Licht hindurchtritt und in die über mindestens eine ihrer Seitenflächen Licht einkoppelbar ist, das zumindest teilweise in Richtung des von dem Reflektor 24 reflektierten und in Lichtaustrittsrichtung 12 durch die Lichtscheibe 40 hindurchtretenden Lichts aus der Lichtscheibe 40 austritt, so dass diese als eine leuchtende Fläche erscheint. Durch das aus der Lichtscheibe 40 austretende Licht kann ein Positionslicht realisiert werden.

Vorzugsweise ist der Lichtscheibe 40 ein Lichtleiter 42 zugeordnet, der die Lichtscheibe 40 zumindest um mehrere ihrer Seitenflächen herum umfangsseitig umgibt. In Stirnflächen des Lichtleiters 42 kann Licht einkoppelt werden, das zumindest teilweise in Richtung der Seitenflächen der Lichtscheibe 40 aus dem Lichtleiter 42 austritt und über die Seitenflächen in die Lichtscheibe 40 einkoppelt. Das in den Lichtleiter 42 eingekoppelte Licht wird vorzugsweise von einer oder mehreren LEDs 14c erzeugt. Diese können auf der gleichen Platine 34 angeordnet sein wie die anderen LEDs 14a, 14b. Somit trifft das von den LEDs 14c ausgesandte Licht nur dann auf die Stirnflächen des Lichtleiters 42, wenn sich die Reflektorbaugruppe 22 in ihrer Ausgangsposition befindet, in der sie gerade aus in Fahrtrichtung gerichtet ist und nicht um die Drehachse 26 gedreht.

Vorzugsweise hat der Halterahmen 16 seitliche Lagerstellen 36 (vgl. Figur 7), mittels der das gesamte LED-Lichtmodul 10 um eine horizontale Drehachse 38 verschwenkbar ist. Durch ein vertikales Verschwenken der Reflektorbaugruppe 10 um die horizontale Drehachse 38 kann eine Leuchtweitenregulierung realisiert werden. Außerdem kann durch Anheben der Reflektorbaugruppe 10 während sie ein Abblendlicht erzeugt, eine Lichtfunktion (z.B. ein 'Zusatzfernlicht') realisiert werden, welche die Erzeugung eines Fernlichts unterstützt. In diesem Fall würde das Fernlicht also aus einem angehobenen Abblendlicht bestehen.

Damit die Antriebseinheit 28 eine Betätigungsbewegung in eine entsprechende Drehbewegung der Reflektorbaugruppe 22 um die vertikale Drehachse 26 umwandeln kann, verfügt das LED-Lichtmodul 10 über ein Getriebe. Dieses umfasst beispielsweise ein erstes Zahnrad 44, das der Antriebseinheit 28 zugeordnet ist. Insbesondere ist die Antriebseinheit 28 als ein Elektromotor, besonders bevorzugt als ein Schrittmotor ausgebildet, und ist das Zahnrad 44 drehfest auf einer Motorwelle 46 des Motors 28 befestigt. Der Reflektorbaugruppe 22 ist ein weiteres Zahnrad 48 des Getriebes zugeordnet. Das Getriebe ist zur Spielminimierung/-vermeidung als verspanntes Getriebe ausgeführt. Die beiden Rahmenhälften 16a, 16b weisen Vertiefungen 50a, 50b auf, in denen nach dem Zusammensetzen der beiden Rahmenhälften 16a, 16b die Zahnräder 44, 48 aufgenommen sind.

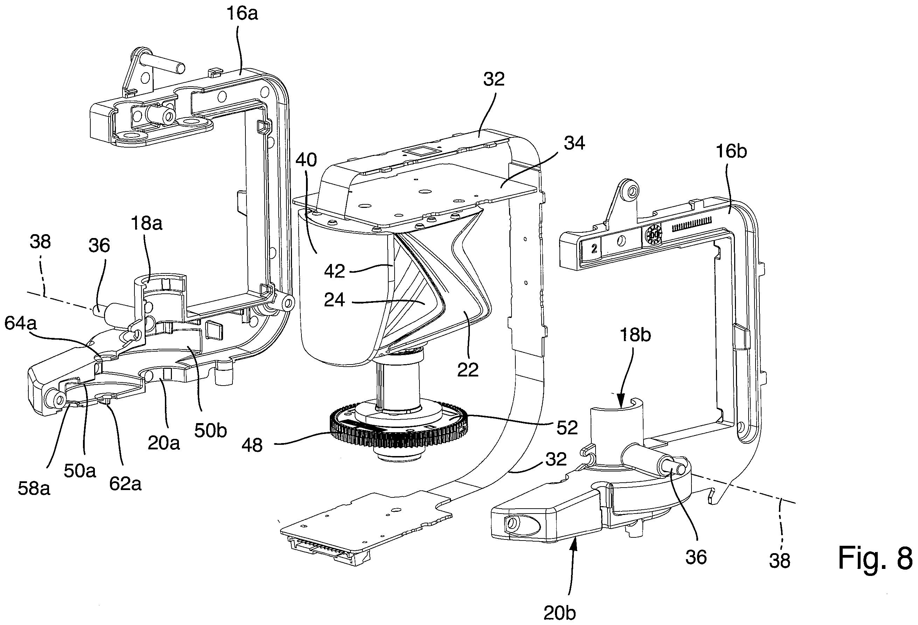

Ferner ist der Reflektorbaugruppe 22 mindestens ein Magnet 52 und der Antriebseinheit 28 bzw. dem Halterahmen 16 ein magnetfeldsensitiver Sensor 54 zugeordnet, wobei die beiden Rahmenhälften 16a, 16b Vertiefungen 50c aufweisen, in denen nach dem Zusammensetzen der beiden Rahmenhälften 16a, 16b der Magnet 52 und der Sensor 54 aufgenommen sind (vgl. Figuren 7 und 8). Der Sensor 54 ist bspw. auf einer Platine 56 angeordnet. Vorzugsweise ist der Sensor 54 als ein Hallsensor ausgebildet. Der Magnet 52 ist vorzugsweise als ein Ringmagnet ausgebildet, der integraler Bestandteil mit dem weitern Zahnrad 48 ist oder mit diesem zumindest eine Einheit bildet. Somit wird der Magnet 52 ebenfalls in den Vertiefungen 50b der Rahmenhälften 16a, 16b aufgenommen, der denen auch das weitere Zahnrad 48 aufgenommen wird.

Vorzugsweise ist die Antriebseinheit 28 außen an dem Halterahmen 16 befestigt. Der Halterahmen 16 weist eine Öffnung 58 für ein bewegbares Betätigungselement der Antriebseinheit 28 auf, insbesondere für die Motorwelle 46 eines Elektromotors. Die Öffnung 58 ist zu einem Teil 58a in der einen Rahmenhälfte 16a und zu einem anderen Teil (in Figur 7 nicht zu erkennen) in der anderen Rahmenhälfte 16b ausgebildet. Die Öffnung 58 bildet sich also durch Zusammensetzen der beiden Rahmenhälften 16a, 16b.

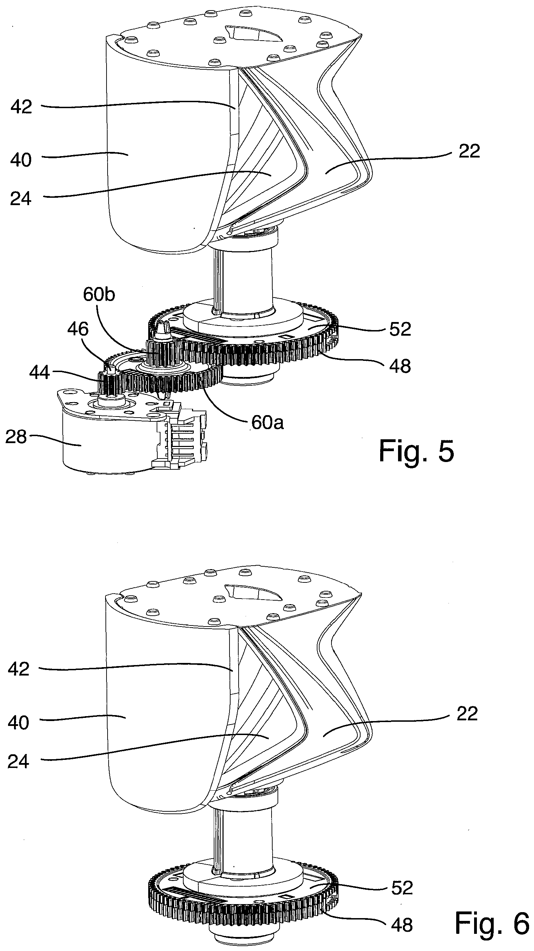

Der Antrieb des der Reflektorbaugruppe 22 zugeordneten weiteren Zahnrads 48 des Getriebes kann unmittelbar durch das erste Zahnrad 44 erfolgen, oder aber mittelbar über mindestens ein weiteres Zahnrad. In dem gezeigten Beispiel verfügt das Getriebe über zwei weitere Zahnräder 60a, 60b (vgl. Figur 5). Die weiteren Zahnräder 60a, 60b, welche die Drehbewegung des ersten Zahnrads 44 der Motorwelle 46 auf das weitere Zahnrad 48 der Reflektorbaugruppe 22 übertragen, sind vorzugsweise ebenfalls in mindestens einer entsprechenden Lagerstelle 62, 64 in dem Halterahmen 16 gelagert. Auch dabei ist es vorteilhaft, wenn die entsprechenden Lagerstellen 62, 64 zu einem Teil 62a, 64a in der einen Rahmenhälfte 16a und zu einem anderen Teil (nicht dargestellt) in der anderen Rahmenhälfte 16b ausgebildet sind und sich die Lagerstellen 62, 64 durch Zusammensetzen der beiden Rahmenhälften 16a, 16b bilden.

Es wird vorgeschlagen, dass die Steuereinheit 30 außen an dem Halterahmen 16 befestigt ist. Die Steuereinheit 30 umfasst bspw. eine Leiterplatte (sog. PCB) auf der elektrische und elektronische Bauelemente, Buchsen, Stecker, Kontaktstifte u.a. angeordnet und kontaktiert sein können. Die Steuereinheit 30 wird vorzugsweise an die Außenseite des Halterahmens 16 geschraubt. In dem dargestellten Beispiel ist die Steuereinheit 30 an einer Unterseite eines unteren Abschnitts des Halterahmens 16 befestigt.

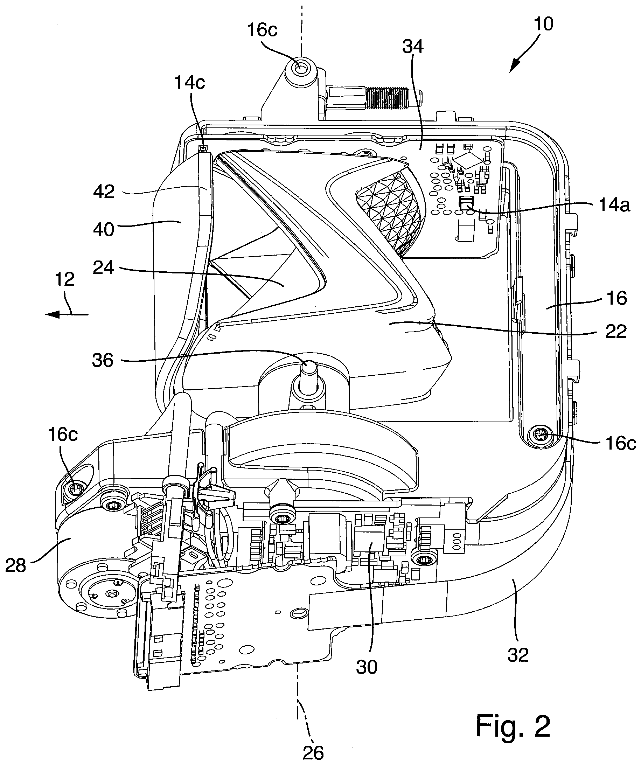

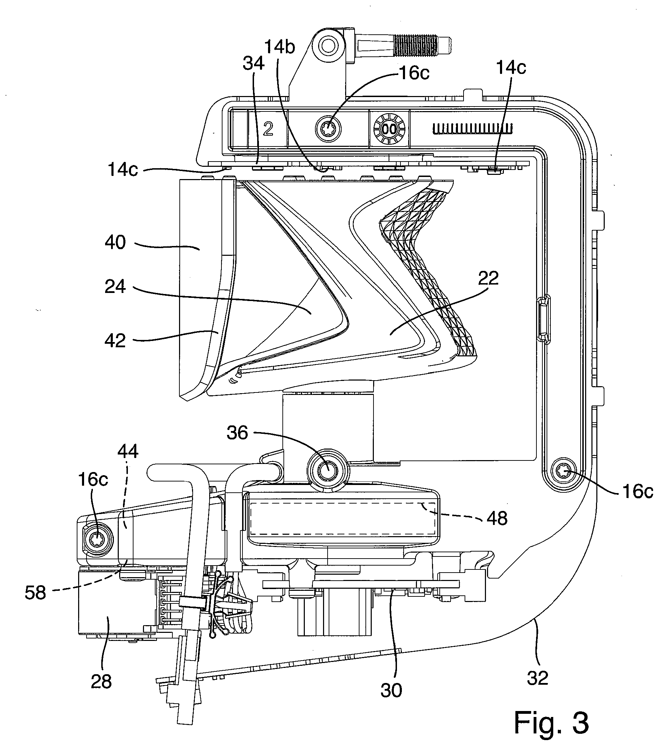

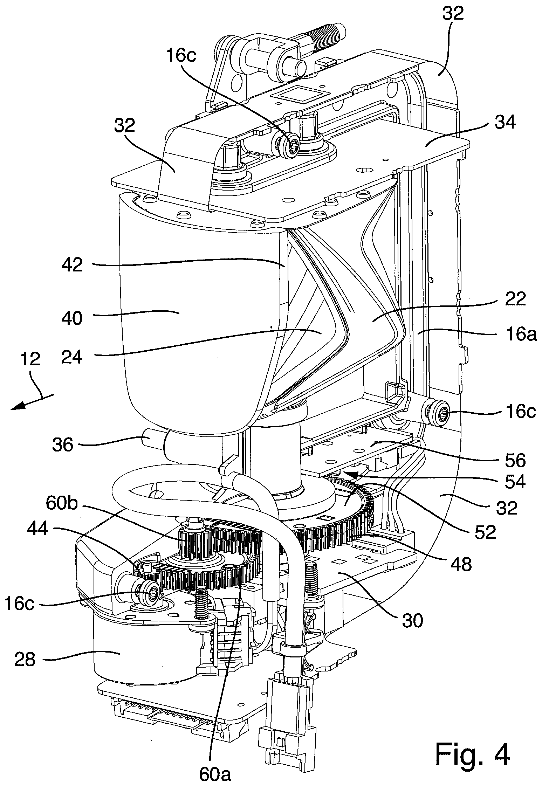

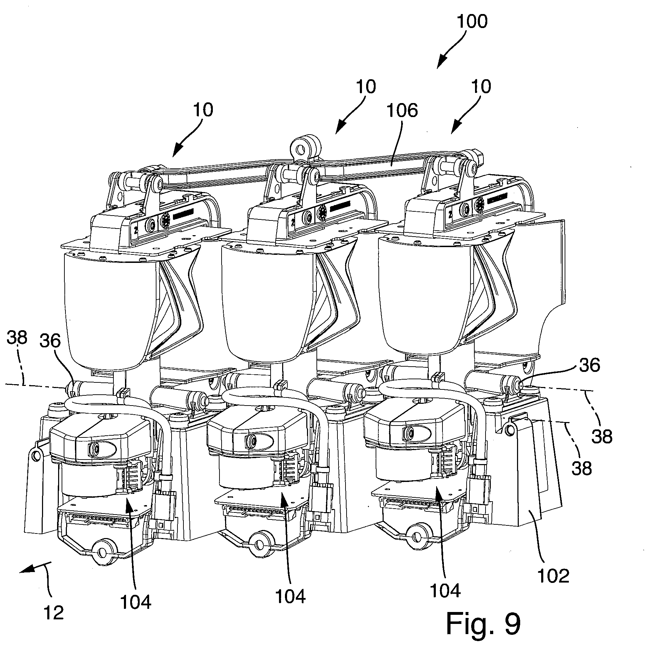

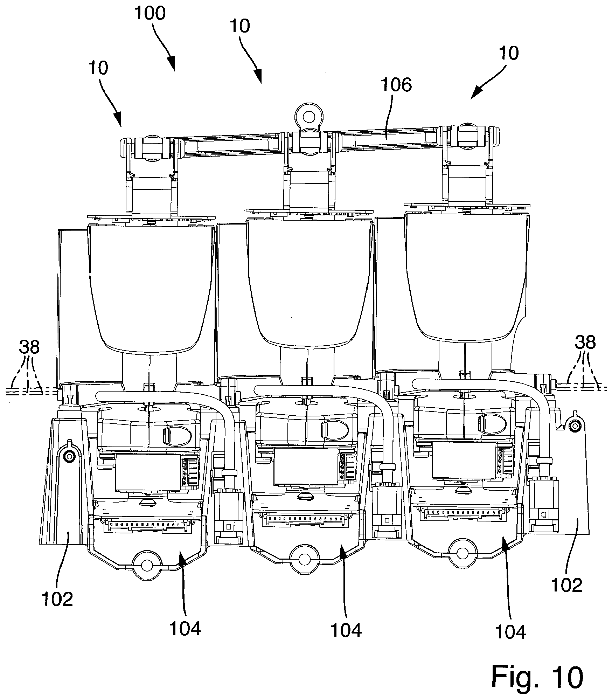

In den Figuren 9 und 10 ist jeweils eine Lichtmodulgruppe 100 dargestellt, die mehrere nebeneinander angeordnete LED-Lichtmodule 10 aus den Figuren 1 bis 8 aufweist. In dem gezeigten Beispiel umfasst die Lichtmodulgruppe 100 drei nebeneinander angeordnete Lichtmodule 10. Die Lichtmodulgruppe 100 umfasst einen fest mit einem Gehäuse des Scheinwerfers, in den die Lichtmodulgruppe 100 eingebaut wird, verbundenes Trägerelement 102, das Aussparungen 104 zur Aufnahme der drei LED-Lichtmodule 10 aufweist. Die Lichtmodule 10 sind über ihre jeweiligen seitlichen Lagerstellen 36 an dem Trägerelement 102 jeweils um eine horizontale Drehachse 38 verschwenkbar gelagert.

Die horizontalen Achsen 38 müssen nicht deckungsgleich sein. Sie müssen sich auch nicht alle auf einer gemeinsamen horizontalen Ebene befinden. In dem Beispiel sind die Achsen 38 auf unterschiedlichen horizontalen Ebenen angeordnet (vgl. Figur 10) und verlaufen nach hinten (in die Zeichenebene der Figur 9) versetzt zueinander. Die drei Lichtmodule 10 werden gemeinsam um den gleichen Betrag verschwenkt. Zu diesem Zweck ist ein gemeinsames Verteilergestänge 106 jeweils an der Oberseite der LED-Lichtmodule 10 bzw. einem oberen Abschnitt der Halterahmen 16 angelenkt. Das Verteilergestänge 106 wird mittels eines Aktors (nicht dargestellt), der bspw. als ein Elektromotor, vorzugsweise als ein Schrittmotor, oder als ein Magnet ausgebildet ist, parallel zur Lichtaustrittsrichtung 12 bewegt. Diese Bewegung des Gestänges 106 führt zu einem vertikalen Verschwenken der Lichtmodule 10. Dadurch kann eine Leuchtweitenregulierung oder eine Fernlichtfunktion durch Anheben einer Abblendlichtverteilung realisiert werden.

## Patentansprüche

1. LED-Lichtmodul (10) für einen
Kraftfahrzeugscheinwerfer, das Lichtmodul (10) umfassend mindestens eine LED (14a, 14b, 14c) zum Aussenden von Licht, eine in einem Halterahmen (16) mittels mindestens einer Lagerstelle (18, 20) um eine vertikale Drehachse (26) drehbar gelagerte Reflektorbaugruppe (22) mit einem Reflektor (24) zum Reflektieren zumindest eines Teils des ausgesandten Lichts, eine elektrische Antriebseinheit (28) zum Drehen der Reflektorbaugruppe (22) um die vertikale Drehachse (26), und eine elektrische Steuereinheit (30) zur Steuerung der Antriebseinheit (28), **dadurch gekennzeichnet, dass** der Halterahmen (16) entlang einer vertikalen Schnittebene, die parallel zu oder deckungsgleich mit der vertikalen Drehachse (26) verläuft, in zwei Rahmenhälften (16a, 16b) unterteilt ist, wobei die mindestens eine Lagerstelle (18, 20) für die Reflektorbaugruppe (22) zu einem Teil (18a, 20a) in der einen Rahmenhälfte (16a) und zu einem anderen Teil (18b, 20b) in der anderen Rahmenhälfte (16b) ausgebildet ist und sich die mindestens eine Lagerstelle (18, 20) durch Zusammensetzen der beiden Rahmenhälften (16a, 16b) bildet.

2. LED-Lichtmodul (10) nach Anspruch 1, **dadurch gekennzeichnet, dass** die Reflektorbaugruppe (22) in dem Halterahmen (16) mittels zweier Lagerstellen (18, 20) um die vertikale Drehachse (26) drehbar gelagert ist, wobei die beiden Lagerstellen (18, 20) unterhalb der Reflektorbaugruppe (22) an einem unteren Abschnitt des Halterahmens (16) entlang der vertikalen Drehachse (26) versetzt zueinander angeordnet sind.

3. LED-Lichtmodul (10) nach Anspruch 1 oder 2, **dadurch gekennzeichnet, dass** der Antriebseinheit (28) mindestens ein Zahnrad (44) eines Getriebes zugeordnet ist, das zur Umwandlung einer Betätigungsbewegung der Antriebseinheit (28) in eine entsprechende Drehbewegung der Reflektorbaugruppe (22) um die vertikale Drehachse (26) vorgesehen ist, und dass der Reflektorbaugruppe (22) mindestens ein weiteres Zahnrad (48) des Getriebes zugeordnet ist, wobei die beiden Rahmenhälften (16a, 16b) Vertiefungen (50a, 50b) aufweisen, in denen nach dem Zusammensetzen der beiden Rahmenhälften (16a, 16b) die Zahnräder (44, 48) aufgenommen sind.

4. LED-Lichtmodul (10) nach einem der Ansprüche 1 bis 3, **dadurch gekennzeichnet, dass** der Reflektorbaugruppe (22) mindestens ein Magnet (54) und der Antriebseinheit (28) ein magnetfeldsensitiver Sensor (54) zugeordnet ist, wobei die beiden Rahmenhälften (16a, 16b) Vertiefungen (50b, 50c) aufweisen, in denen nach dem Zusammensetzen der beiden Rahmenhälften (16a, 16b) der Magnet (54) und der Sensor (56) aufgenommen sind.

5. LED-Lichtmodul (10) nach einem der Ansprüche 1 bis 3, **dadurch gekennzeichnet, dass** der Reflektorbaugruppe (22) mindestens ein Magnet (54) und der Antriebseinheit (28) ein magnetfeldsensitiver Sensor (54) zugeordnet ist, wobei die beiden Rahmenhälften (16a, 16b) Vertiefungen (50b, 50c) aufweisen, in denen nach dem Zusammensetzen der beiden Rahmenhälften (16a, 16b) der Magnet (54) und der Sensor (56) aufgenommen sind.

6. LED-Lichtmodul (10) nach einem der Ansprüche 1 bis 5, **dadurch gekennzeichnet, dass** die Steuereinheit (30) außen an dem Halterahmen (16) befestigt ist.

7. LED-Lichtmodul (10) nach einem der Ansprüche 1 bis 6, **dadurch gekennzeichnet, dass** die mindestens eine LED (14a, 14b, 14c) relativ zu dem Halterahmen (16) feststehend und relativ zu der Reflektorbaugruppe (22) berührungslos in dem Lichtmodul (10) angeordnet ist.

8. LED-Lichtmodul (10) nach Anspruch 7, **dadurch gekennzeichnet, dass** die mindestens eine LED (14a, 14b, 14c) bei in den Kraftfahrzeugscheinwerfer eingebautem Lichtmodul (10) oberhalb der Reflektorbaugruppe (22) angeordnet ist.

9. LED-Lichtmodul (10) nach Anspruch 7 oder 8, **dadurch gekennzeichnet, dass** die mindestens eine LED (14a, 14b, 14c) mittels Flexbandleitungen (32) elektrisch kontaktiert ist, die außen entlang des Halterahmens (16) verlaufen.

10. LED-Lichtmodul (10) nach einem der Ansprüche 1 bis 9, **dadurch gekennzeichnet, dass** die mindestens eine LED eine RGB-LED (14a) zum Aussenden von Licht einer beliebigen Farbe umfasst.

11. LED-Lichtmodul (10) nach einem der Ansprüche 1 bis 10, **dadurch gekennzeichnet, dass** die mindestens eine LED eine Hochleistungs-LED (14b) zum Aussenden von weißem Licht umfasst, die in einem Brennpunkt des Reflektors (24) angeordnet ist.

12. LED-Lichtmodul (10) nach Anspruch 11, **dadurch gekennzeichnet, dass** der Brennpunkt des Reflektors (24) auf der vertikalen Drehachse (26) liegt.

13. LED-Lichtmodul (10) nach einem der Ansprüche 1 bis 12, **dadurch gekennzeichnet, dass** der Halterahmen (16) seitliche Lagerstellen (36) aufweist, mittels der das LED-Lichtmodul (10) um eine horizontale Drehachse (38) verschwenkbar ist.

14. LED-Lichtmodul (10) nach einem der Ansprüche 1 bis 13, **dadurch gekennzeichnet, dass** die Reflektorbaugruppe (22) im Strahlengang des von dem Reflektor (24) reflektierten Lichts eine Lichtscheibe (40) aufweist, durch die das reflektierte Licht hindurchtritt und in die über mindestens eine ihrer Seitenflächen Licht einkoppelbar ist, das zumindest teilweise in Richtung (12) des von dem Reflektor (24) reflektierten und durch die Lichtscheibe (40) hindurchtretenden Lichts aus der Lichtscheibe (40) austritt, so dass diese als eine leuchtende Fläche erscheint.

15. LED-Lichtmodul (10) nach Anspruch 14, **dadurch gekennzeichnet, dass** die Lichtscheibe (40) zumindest um mehrere ihrer Seitenflächen herum einen Lichtleiter (42) aufweist, in den Licht einkoppelbar ist, das zumindest teilweise in Richtung der Seitenflächen der Lichtscheibe (40) aus dem Lichtleiter (42) austritt und über die Seitenflächen in die Lichtscheibe (40) einkoppelt.

## Claims

1. LED light module (10) for a motor vehicle headlight, the light module (10) comprising at least one LED (14a, 14b, 14c) for emitting light, a reflector assembly (22) that is rotatably mounted in a holding frame (16) about a vertical axis of rotation (26) by means of at least one mounting point (18, 20) and comprises a reflector (24) for reflecting at least some of the emitted light, an electric drive unit (28) for rotating the reflector assembly (22) about the vertical axis of rotation (26), and an electrical control unit (30) for controlling the drive unit (28), **characterized in that** the holding frame (16) is divided into two frame halves (16a, 16b) along a vertical sectional plane which extends in parallel or congruently with the vertical axis of rotation (26), part (18a, 20a) of the at least one mounting point (18, 20) for the reflector assembly (22) being formed in one frame half (16a) and another part (18b, 20b) of said mounting point being formed in the other frame half (16b), and the at least one mounting point (18, 20) being formed by assembling the two frame halves (16a, 16b).

2. LED light module (10) according to claim 1, **characterized in that** the reflector assembly (22) is rotatably mounted in the holding frame (16) about the vertical axis of rotation (26) by means of two mounting points (18, 20), the two mounting points (18, 20) being arranged below the reflector assembly (22) on a lower portion of the holding frame (16) so as to be offset from one another along the vertical axis of rotation (26) .

3. LED light module (10) according to claim 1 or claim 2, **characterized in that** the drive unit (28) is assigned at least one gear (44) of a gear mechanism which is provided to convert an actuating movement of the drive unit (28) into a corresponding rotary movement of the reflector assembly (22) about the vertical axis of rotation (26), and **in that** the reflector assembly (22) is assigned at least one further gear (48) of the gear mechanism, the two frame halves (16a, 16b) having recesses (50a, 50b) in which the gears (44, 48) are received after the two frame halves (16a, 16b) have been assembled.

4. LED light module (10) according to any of claims 1 to 3, **characterized in that** the reflector assembly (22) is assigned at least one magnet (54) and the drive unit (28) is assigned a magnetic-field-sensitive sensor (54), the two frame halves (16a, 16b) having recesses (50b, 50c) in which the magnet (54) and the sensor (56) are received after the two frame halves (16a, 16b) have been assembled.

5. LED light module (10) according to any of claims 1 to 3, **characterized in that** the reflector assembly (22) is assigned at least one magnet (54) and the drive unit (28) is assigned a magnetic-field-sensitive sensor (54), the two frame halves (16a, 16b) having recesses (50b, 50c) in which the magnet (54) and the sensor (56) are received after the two frame halves (16a, 16b) have been assembled.

6. LED light module (10) according to any of claims 1 to 5, **characterized in that** the control unit (30) is fastened to the outside of the holding frame (16).

7. LED light module (10) according to any of claims 1 to 6, **characterized in that** the at least one LED (14a, 14b, 14c) is fixed relative to the holding frame (16) and is arranged in the light module (10) so as to be contactless relative to the reflector assembly (22).

8. LED light module (10) according to claim 7, **characterized in that** the at least one LED (14a, 14b, 14c) is arranged above the reflector assembly (22) when the light module (10) is installed in the motor vehicle headlight.

9. LED light module (10) according to claim 7 or claim 8, **characterized in that** the at least one LED (14a, 14b, 14c) is electrically contacted by means of flexible ribbon cables (32) which extend along the outside of the holding frame (16).

10. LED light module (10) according to any of claims 1 to 9, **characterized in that** the at least one LED comprises an RGB LED (14a) for emitting light of any color.

11. LED light module (10) according to any of claims 1 to 10, **characterized in that** the at least one LED comprises a high-power LED (14b) which is intended for emitting white light and is arranged in a focal point of the reflector (24).

12. LED light module (10) according to claim 11, **characterized in that** the focal point of the reflector (24) lies on the vertical axis of rotation (26).

13. LED light module (10) according to any of claims 1 to 12, **characterized in that** the holding frame (16) has lateral mounting points (36) by means of which the LED light module (10) can be pivoted about a horizontal axis of rotation (38).

14. LED light module (10) according to any of claims 1 to 13, **characterized in that** the reflector assembly (22) has, in the beam path of the light reflected by the reflector (24), a light cover (40) through which the reflected light passes and into which, via at least one of its side surfaces, light can be coupled, at least some of which emerges from the light cover (40) in the direction (12) of the light that is reflected by the reflector (24) and passes through the light cover (40), such that said cover appears as an illuminating surface.

15. LED light module (10) according to claim 14, **characterized in that** the light cover (40) has, at least around a plurality of its side surfaces, a light guide (42) into which light can be coupled, at least some of which emerges from the light guide (42) in the direction of the side surfaces of the light cover (40) and couples into the light cover (40) via the side surfaces.

## Revendications

1. Module de lumière à DEL (10) pour un phare de véhicule automobile, ledit module de lumière (10) comprenant au moins une DEL (14a, 14b, 14c) pour émettre de la lumière, un ensemble de réflecteur (22) qui est supporté à rotation, au moyen d'au moins un point de support (18, 20), autour d'un axe vertical de rotation (26) dans un cadre de maintien (16) et qui comprend un réflecteur (24) pour réfléchir au moins une partie de la lumière émise, une unité d'entraînement électrique (28) pour faire tourner ledit ensemble de réflecteur (22) autour de l'axe vertical de rotation (26), et une unité de commande électrique (30) pour commander l'unité d'entraînement (28), **caractérisé par le fait que** le cadre de maintien (16) est divisé en deux moitiés de cadre (16a, 16b) le long d'un plan de coupe vertical qui s'étend parallèlement à ou coïncide avec l'axe vertical de rotation (26), dans lequel ledit au moins un point de support (18, 20) pour l'ensemble de réflecteur (22) est réalisé pour une partie (18a, 20a) dans l'une (16a) des moitiés de cadre et pour une autre partie (18b, 20b) dans l'autre moitié de cadre (16b), et ledit au moins un point de support (18, 20) est formé en assemblant les deux moitiés de cadre (16a, 16b).

2. Module de lumière à DEL (10) selon la revendication 1, **caractérisé par le fait que** l'ensemble de réflecteur (22) est supporté à rotation au moyen de deux points de support (18, 20) autour de l'axe vertical de rotation (26) dans le cadre de maintien (16), dans lequel les deux points de support (18, 20) sont disposés au-dessous de l'ensemble de réflecteur (22) sur une portion inférieure du cadre de maintien (16) en étant décalés l'un par rapport à l'autre le long de l'axe vertical de rotation (26) .

3. Module de lumière à DEL (10) selon la revendication 1 ou 2, **caractérisé par le fait qu'**à l'unité d'entraînement (28) est associée au moins une roue dentée (44) d'un engrenage qui est prévu pour transformer un mouvement d'actionnement de l'unité d'entraînement (28) en un mouvement de rotation correspondant de l'ensemble de réflecteur (22) autour de l'axe vertical de rotation (26), et qu'à l'ensemble de réflecteur (22) est associée au moins une autre roue dentée (48) de l'engrenage, dans lequel les deux moitiés de cadre (16a, 16b) comprennent des creux (50a, 50b) dans lesquels sont logées les roues dentées (44, 48) après avoir assemblé les deux moitiés de cadre (16a, 16b).

4. Module de lumière à DEL (10) selon l'une quelconque des revendications 1 à 3, **caractérisé par le fait qu'**à l'ensemble de réflecteur (22) est associé au moins un aimant (54) et qu'à l'unité d'entraînement (28) est associé un capteur (54) sensible aux champs magnétiques, dans lequel les deux moitiés de cadre (16a, 16b) présentent des creux (50b, 50c) dans lesquels sont logés l'aimant (54) et le capteur (56) après avoir assemblé les deux moitiés de cadre (16a, 16b).

5. Module de lumière à DEL (10) selon l'une quelconque des revendications 1 à 3, **caractérisé par le fait qu'**à l'ensemble de réflecteur (22) est associé au moins un aimant (54) et qu'à l'unité d'entraînement (28) est associé un capteur (54) sensible aux champs magnétiques, dans lequel les deux moitiés de cadre (16a, 16b) présentent des creux (50b, 50c) dans lesquels sont logés l'aimant (54) et le capteur (56) après avoir assemblé les deux moitiés de cadre (16a, 16b).

6. Module de lumière à DEL (10) selon l'une quelconque des revendications 1 à 5, **caractérisé par le fait que** l'unité de commande (30) est fixée à l'extérieur du cadre de maintien (16).

7. Module de lumière à DEL (10) selon l'une quelconque des revendications 1 à 6, **caractérisé par le fait que** ladite au moins une DEL (14a, 14b, 14c) est disposé dans le module de lumière (10) de manière fixe par rapport au cadre de maintien (16) et sans contact par rapport à l'ensemble de réflecteur (22).

8. Module de lumière à DEL (10) selon la revendication 7, **caractérisé par le fait que** ladite au moins une DEL (14a, 14b, 14c) est disposée au-dessus de l'ensemble de réflecteur (22) lorsque le module de lumière (10) est monté dans le phare de véhicule automobile.

9. Module de lumière à DEL (10) selon la revendication 7 ou 8, **caractérisé par le fait que** ladite au moins une DEL (14a, 14b, 14c) est mise en contact électrique au moyen de lignes de ruban souple (32) qui s'étendent le long de l'extérieur du cadre de maintien (16).

10. Module de lumière à DEL (10) selon l'une quelconque des revendications 1 à 9, **caractérisé par le fait que** ladite au moins une DEL comprend une DEL RVB (14a) pour émettre de la lumière de n'importe quelle couleur.

11. Module de lumière à DEL (10) selon l'une quelconque des revendications 1 à 10, **caractérisé par le fait que** ladite au moins une DEL comprend une DEL à haute puissance (14b) destinée à émettre de la lumière blanche et qui est disposée dans un foyer du réflecteur (24).

12. Module de lumière à DEL (10) selon la revendication 11, **caractérisé par le fait que** le foyer du réflecteur (24) se situe sur l'axe vertical de rotation (26).

13. Module de lumière à DEL (10) selon l'une quelconque des revendications 1 à 12, **caractérisé par le fait que** le cadre de maintien (16) présente des points de support latéraux (36) au moyen desquels le module de lumière à DEL (10) peut pivoter autour d'un plan horizontal de rotation (38).

14. Module de lumière à DEL (10) selon l'une quelconque des revendications 1 à 13, **caractérisé par le fait que** l'ensemble de réflecteur (22) comprend une glace (40) dans le trajet des rayons de la lumière réfléchie par le réflecteur (24), laquelle est traversée par la lumière réfléchie et dans laquelle peut être couplée de la lumière via au moins une de ses faces latérales, qui sort au moins en partie dans la direction (12) de la lumière réfléchie par le réflecteur (24) et traversant la glace (40) de sorte que celle-ci apparaît comme une surface lumineuse.

15. Module de lumière à DEL (10) selon la revendication 14, **caractérisé par le fait que** la glace (40) présente un guide de lumière (42) au moins autour de plusieurs de ses faces latérales, dans lequel peut être couplée de la lumière qui sort du guide de lumière (42) au moins en partie dans la direction des faces latérales de la glace (40) et est couplée dans la glace (40) via les faces latérales.
